# FASCICULE DE BREVET EUROPEEN

(11) **EP 1 264 713 B1**
(45) Date de publication et mention de la délivrance du brevet: **22.03.2006**
(21) Numéro de dépôt: 02009542.8
(22) Date de dépôt: 26.04.2002
(51) Int. Cl.: B60C 11/12

(54) **Bande de roulement comportant des nervures pourvues d'incisions d'inclinaison variable**
Lauffläche mit neigungsvariablen Feineinschnitten enthaltenden Rippen
Tread having ribs comprising sipes with variable inclination

(30) Priorité: 14.05.2001 FR 0106353
(43) Date de publication de la demande: 11.12.2002
(73) Titulaire: Société de Technologie Michelin, 63000 Clermont-Ferrand (FR); MICHELIN RECHERCHE ET TECHNIQUE S.A., CH-1763 Granges-Paccot (CH)
(72) Inventeur: Radulescu, Robert, 63170 Perignat Les Sarlieves (FR)
(74) Mandataire: Diernaz, Christian

(56) Documents cités:
- EP-A- 0 810 104
- US-B1- 6 196 288
- PATENT ABSTRACTS OF JAPAN vol. 1998, no. 10, 31 août 1998 (1998-08-31) & JP 10 129218 A (BRIDGESTONE CORP), 19 mai 1998 (1998-05-19)

## Description

La présente invention se rapporte aux bandes de roulement pour pneumatiques destinés à équiper l'essieu avant des véhicules de transport et plus particulièrement des véhicules poids lourd, susceptibles d'effectuer de longs trajets à vitesse soutenue.

Ces pneumatiques comportent, en général, une armature de carcasse comprenant une pluralité de renforts disposés radialement, cette armature de carcasse étant elle-même surmontée d'une armature de sommet s'étendant dans la direction circonférentielle. Cette armature de sommet est composée d'au moins deux nappes superposées les unes sur les autres, chaque nappe étant formée de mélange de gomme renforcé par une pluralité de câbles ou fils peu extensibles, de préférence en acier, disposés parallèlement les uns aux autres dans une même nappe et suivant une direction faisant un angle au plus égal à 40°, les câbles d'une nappe à l'autre étant croisés entre eux. Cette armature de sommet peut être complétée, d'une part par deux demi nappes formées de câbles peu extensibles faisant avec la direction circonférentielle un angle compris entre 45° et 80°, d'autre part, par au moins une nappe formées de câbles dits "élastiques" placés radialement à l'extérieur des nappes de sommet dont les câbles de renfort font un angle inférieur à 40°.

L'armature de sommet est par ailleurs surmontée sur sa surface radialement extérieure d'une bande de roulement réalisée avec au moins un mélange de caoutchouc dont la partie radialement à l'extérieur du pneumatique forme la surface de roulement destinée à venir en contact avec la chaussée pendant le roulage dudit pneumatique.

Pour obtenir une performance d'adhérence satisfaisante en roulage sur une chaussée recouverte d'eau, cette bande de roulement est pourvue sur sa surface extérieure, dans le cas de pneumatiques destinés à l'équipement de l'essieu avant directeur de véhicules poids lourd, d'une pluralité de rainures d'orientation générale circonférentielle. Ces rainures forment une sculpture comportant une pluralité de nervures, chaque nervure ayant une face de contact radialement à l'extérieur et des parois latérales pouvant être sensiblement perpendiculaires à la face de contact de la nervure ou bien pouvant faire un angle de dépouille non nul avec cette face. L'intersection de chaque paroi latérale avec la face de contact d'une nervure forme une arête.

On a constaté, pendant le roulage du pneumatique pourvu de cette bande de roulement, l'apparition d'une usure dite "irrégulière" car se développant davantage sur et au voisinage des arêtes des nervures que sur le reste de la face de contact desdites nervures. Cette usure irrégulière localisée présente plusieurs inconvénients : outre un aspect non esthétique, elle peut conduire à un retrait prématuré du pneumatique ; cette usure affecte aussi le bon fonctionnement mécanique des nervures lorsque le pneumatique est soumis à des sollicitations transversales notamment en virage, les arêtes se trouvant déportées par rapport à la surface de contact et ladite surface diminuant en proportion.

Pour améliorer la résistance à cette usure irrégulière de ce type de bande de roulement, le document US 6,196,288 enseigne de réaliser, au voisinage de chaque arête de chaque nervure, une pluralité d'incisions dont les traces sur la face de contact ont des longueurs comprises entre 4 mm et 8 mm et qui présentent, dans l'épaisseur de la nervure, une inclinaison moyenne constante comprise entre 5° et 15° avec une perpendiculaire à la face de contact.

Si cette disposition permet effectivement de lutter contre ce type d'usure irrégulière, on constate toutefois que l'usure moyenne globale des nervures pourvues de telles incisions est très sensiblement augmentée par rapport à l'usure globale moyenne des nervures dépourvues de telles incisions.

Pour résumer, l'usure de chaque nervure devient plus régulière mais la durée de vie en usure de la bande de roulement est réduite comparée à celle d'un pneumatique dont la bande de roulement n'est pas pourvu d'incisions inclinées. Par durée de vie sur usure, on entend la durée d'utilisation possible avant usure complète d'une bande de roulement d'un pneumatique en roulage conduisant soit au changement de pneumatique soit au renouvellement de la bande de roulement par rechapage.

Il existe donc un besoin d'une sculpture pour pneumatiques destinés à équiper l'essieu avant des véhicules poids lourd comportant au moins une nervure qui ne présente pas ou peu d'usure irrégulière et sensiblement une même vitesse d'usure pour toutes les nervures, tout en conservant une faible vitesse moyenne d'usure globale, ces performances conférant au pneumatique une durée de vie sur usure améliorée par rapport au pneumatique rentrant dans la portée du brevet précédemment cité.

Conformément à l'invention, il est proposé une bande de roulement pour pneumatique destiné à équiper l'essieu avant d'un véhicule poids lourd, ce pneumatique présentant un sens de roulage préférentiel et comportant une armature de carcasse radiale surmontée d'une armature de sommet, cette bande comprenant des rainures d'orientation générale circonférentielle de profondeur H délimitant des nervures, chaque nervure de largeur B ayant une face de contact destinée à être en contact avec la chaussée et deux faces latérales coupant la face de contact pour former deux arêtes, au moins une des nervures étant munie près de chacune de ses arêtes d'une pluralité d'incisions d'orientation générale transversale débouchant sur la face de contact et ayant une largeur inférieure à 1.5 mm et une profondeur E au moins égale à 40% de la profondeur H des rainures, ces incisions, sensiblement parallèles entre elles, présentant dans l'épaisseur de la bande une inclinaison moyenne α non nulle par rapport à la direction perpendiculaire à la surface de roulement de la bande à l'état neuf de sorte que la force résultante exercée en roulage dans la zone de contact avec la chaussée par ladite chaussée sur la bande tende à redresser les incisions vers une inclinaison moyenne nulle par rapport à cette perpendiculaire, cette bande étant caractérisée en ce que, vue dans un plan de coupe perpendiculaire à l'axe de rotation du pneumatique :

chaque incision d'une même nervure présente, avec une perpendiculaire à la face de contact de ladite nervure au point d'intersection de ladite incision avec ladite face, une inclinaison variable dans l'épaisseur de la bande, chaque incision étant inclinée par rapport à ladite perpendiculaire, en son point d'intersection avec la surface de roulement à l'état neuf, d'un angle β1, l'angle β1 étant supérieur à l'angle α, et d'un angle β2 au point de l'incision le plus à l'intérieur de la bande, l'angle β2 étant inférieur à l'angle α, le point de ladite incision le plus à l'intérieur dans la bande étant situé, par rapport à ladite perpendiculaire, de manière à être en avant du point de l'incision situé sur la face de contact de la nervure.

Vue en coupe, un point d'une incision situé à l'intérieur de la bande est dit en avant du point de l'incision sur la surface de roulement à l'état neuf quand on doit faire tourner, dans le sens de roulage préconisé correspondant au sens de roulage préférentiel du pneumatique, un plan radial (plan contenant l'axe de rotation du pneumatique) passant par le point de l'incision sur la surface de roulement à l'état neuf pour l'amener sur le point de l'incision à l'intérieur de la bande.

Vue en coupe, l'inclinaison moyenne d'une incision est donnée par l'angle que fait la direction reliant le point de l'incision sur la surface de roulement de la bande et le point le plus à l'intérieur de la bande pris dans le même plan de coupe perpendiculaire à l'axe de rotation.

Dans l'état de la technique, s'il est connu des éléments de sculpture de bande de roulement pourvus d'incisions présentant des inclinaisons variables, ces inclinaisons variables ne présentent pas le même sens de variation dans la profondeur et n'ont en conséquence pas l'effet des incisions de l'invention avec l'usure de ladite bande par exemple, la demande européenne EP-A-0810104 montre une pluralité d'incisions présentant une inclinaison moyenne variable dans l'épaisseur de la bande, l'angle d'inclinaison au point le plus à l'intérieur de l'incision étant inférieur à l'angle d'inclinaison en son point d'intersection avec la surface de roulement à l'état neuf. Rien n'est précisé quant au sens d'inclinaison des incisions par rapport à la direction de roulage prédéterminée.

Préférentiellement, l'angle **β1** est au moins égal à 5° et au plus égal à 15°.

Préférentiellement, l'angle **β2** est voisin de ou égal à 0° (c'est-à-dire au plus égal à 5°) tout en étant différent de l'angle **β1.**

De préférence, la largeur des incisions est au plus égale à 0.4 mm ; de plus, les parois de mélange de caoutchouc délimitant lesdites incisions peuvent être pourvues de reliefs (creux, cavités) destinés à coopérer entre eux pour obtenir un blocage d'une paroi contre la paroi en vis-à-vis pour limiter les mouvements relatifs entre ces parois et conserver ainsi une rigidité appropriée à chaque nervure.

Par angle voisin de ou égal à 0°, il faut entendre un angle au maximum égal à 5° (cet angle pouvant être indifféremment positif ou négatif).

De préférence, chaque incision formée près de l'arête d'une nervure débouche également sur une paroi latérale de ladite nervure ; toutefois, il est possible que chaque incision soit décalée transversalement par rapport à cette arête et dans ce cas la distance séparant l'extrémité de la trace de l'incision sur la surface de roulement la plus proche d'une arête d'une nervure de cette arête est au plus égale à 1.5 mm.

Les pneumatiques selon l'invention sont prévus pour être montés sur l'essieu avant d'un véhicule poids lourd, l'inclinaison moyenne des incisions des nervures étant choisie de façon que les efforts moyens résultants exercés par le sol sur chacune desdites nervures agissent suivant une direction tendant à redresser lesdites incisions. La plus forte inclinaison des incisions sur les arêtes des nervures lorsque la bande de roulement est à l'état neuf permet d'éviter l'apparition de l'usure irrégulière sur ces arêtes se produisant essentiellement en début d'utilisation alors que l'inclinaison réduite après usure partielle permet de réguler le taux d'usure global de chaque nervure.

Préférentiellement, les incisions à inclinaison variable dans la profondeur de la bande sont réalisées de manière à présenter une zone de forte inclinaison (au minimum 10°) sur au maximum un tiers de la profondeur de l'incision mesurée perpendiculairement à la face de contact. Ces incisions ont des profondeurs comprises entre 40% et 100% de la hauteur des nervures bord.

Les incisions à inclinaison variable peuvent présenter une variation d'inclinaison régulière et progressive ou bien une variation selon toute autre forme (par exemple linéaire par morceaux).

D'autres caractéristiques et avantages de l'invention ressortent de la description faite ci-après en référence aux figures annexées qui montrent, à titre d'exemples non limitatifs, des formes de réalisation de l'objet de l'invention.

La figure 1 est une vue en plan d'une partie de la surface de roulement d'une bande de roulement d'un véhicule poids lourd selon l'invention;

La figure 2 montre une face latérale d'une nervure de la bande représentée à la figure 1;

La figure 3 montre une vue en coupe d'une variante d'une bande de roulement selon l'invention.

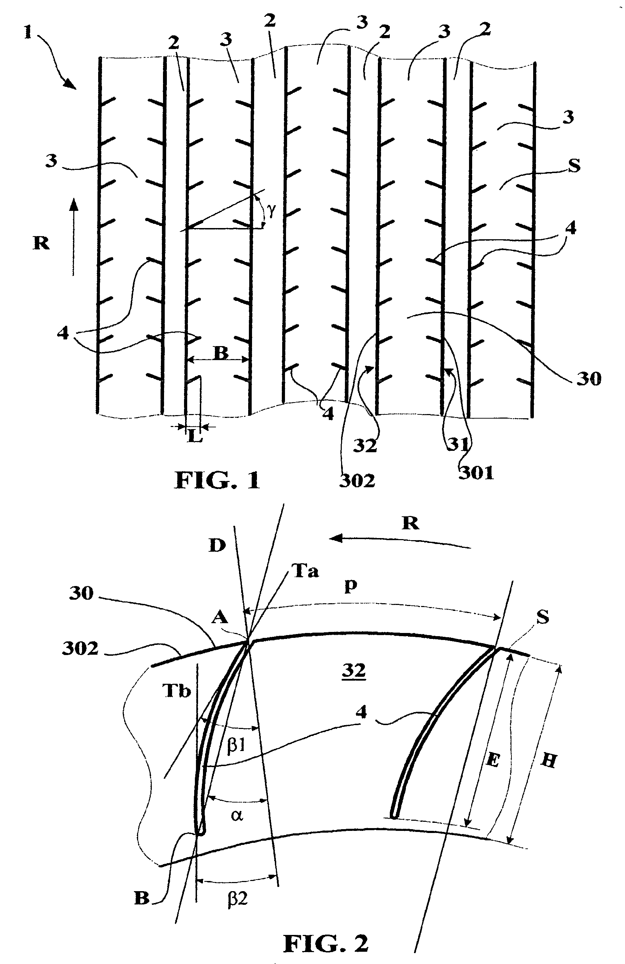

Sur la figure 1, il est représenté une partie de la surface de roulement S d'une bande de roulement 1 d'un pneumatique selon l'invention de dimension 315/80 R 22.5 et destiné à équiper l'essieu avant d'un véhicule poids lourd. Cette bande de roulement 1 comporte quatre rainures principales 2 orientées circonférentiellement, ces quatre rainures présentant une profondeur moyenne de 18 mm. Ces rainures 2 délimitent cinq nervures 3, les nervures transversalement les plus éloignées délimitant la zone de contact de la bande de roulement avec la chaussée pendant le roulage du pneumatique. Chaque nervure 3 comprend une face de contact 30, de largeur égale à 38 mm, formant une partie de la surface de roulement S de la bande et deux faces latérales 31, 32 délimitées par les rainures 2, lesdites faces latérales 31, 32 coupant la face de contact 30 selon deux arêtes 301, 302 respectivement. Chaque nervure 3 est pourvue au voisinage de ses deux arêtes 301, 302 avec une pluralité d'incisions 4 de largeur moyenne égale à 0.4 mm, chaque incision 4 débouchant sur la face de contact 30 et sur une seule face latérale 31 ou 32. Ces incisions 4 ont des traces sur la face de contact 30 dont les longueurs sont ici égales à 4.5 mm.

Chacune desdites incisions 4 présente, avec une perpendiculaire à la face de contact 30 au point d'intersection de l'incision avec ladite face, une inclinaison variable dans l'épaisseur de la bande comme montré à la figure 2.

Sur la figure 2, montrant la face latérale 302 d'une nervure 3 de la bande de roulement de la figure 1, on distingue les traces des incisions 4 qui s'étendent entre la face de contact 30 et une profondeur E égale à 14 mm (soit sensiblement 77% de la profondeur H des rainures délimitant ladite nervure 3).

Chaque incision 4 présente entre le point A, intersection de son tracé sur la face latérale 32 avec l'arête 302, et le point B, point le plus à l'intérieur de la bande, une orientation faisant un angle α ici égal à 7° avec la perpendiculaire D à la face de contact 30 au point A.

Chaque incision 4 présente au niveau de l'arête 302 un tracé dont la tangente Ta fait avec la perpendiculaire D, un angle β1 égal dans le cas présenté à 10° et présente au point B un tracé dont la tangente Tb fait avec la même perpendiculaire D, un angle β2 égal dans le cas présenté à 4°.

Le pas moyen p entre les incisions d'inclinaison variable dans l'épaisseur de la bande est, dans le cas présenté, constant pour chaque nervure, mais il pourrait être différent selon la nervure considérée. Ce pas moyen p est préférentiellement choisi au moins égal à 4 mm et au plus égal à 10 mm; il est dans le cas présent égal à 5 mm.

Ces incisions d'inclinaison variable dans l'épaisseur ont, sur la surface de roulement S, une trace formant un angle γ égal à 15° (cet angle étant mesuré par rapport à une direction perpendiculaire à la direction de roulage et correspond à la direction transversale ou axiale du pneumatique) en forme de V dont la pointe est dirigé dans le sens de rotation préférentiel (repéré par la flèche R) du pneumatique pourvu de cette bande de roulement.

Des pneumatiques pourvus avec une bande de roulement selon la description qui vient d'être donnée ont fait l'objet d'un test comparatif de roulage en comparaison avec un pneumatique témoin pour lequel la seule différence résidait dans le fait que les incisions présentaient une inclinaison constante dans l'épaisseur de la bande de roulement (conditions de test : charge moyenne 3500 kg, pression de gonflage 8.5 bars; vitesse moyenne 80 km/h). Les pneumatiques pourvus d'une bande de roulement selon l'invention présentent une durée de vie en usure irrégulière sensiblement supérieure de 20% à celle des pneumatiques pris comme témoins.

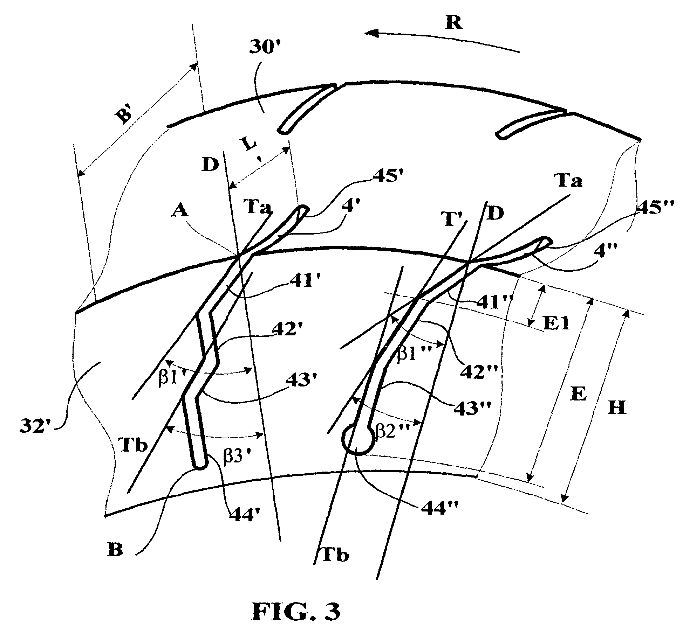

La figure 3 montre une vue partielle en perspective d'une nervure d'une bande de roulement selon l'invention. Cette nervure comprend une pluralité d'incisions 4' et 4" qui sont alternées sur une même arête et réparties régulièrement dans la direction circonférentielle. Des premières incisions 4' présentent, vue en coupe dans un plan perpendiculaire à l'axe de rotation du pneumatique et en particulier sur la face latérale 32' visible sur la figure 3, une succession de quatre tracés rectilignes 41', 42', 43', 44' de même longueur. Le premier tracé 41' suit la droite Ta faisant un angle β1 avec la droite D perpendiculaire à la surface de roulement au point A1 d'intersection de l'incision avec la surface de roulement sur le plan de coupe considéré. Ce premier tracé 41' est prolongé par un deuxième tracé 42' sensiblement parallèle à la direction de la droite D. Le deuxième tracé rectiligne 42' est prolongé par un troisième tracé 43' suivant une droite Tb formant un angle β2 différent de zéro et inférieur à l'angle β1 du premier tracé 41'. Le quatrième tracé rectiligne 44' est parallèle à la droite D.

L'autre incision représentée comprend trois tronçons 41", 42", 43" de longueur égale à environ au tiers de la profondeur totale E de ladite incision. Les deux premiers tronçons 41" et 42" forment respectivement des angles β1, β2 différent de zéro, l'angles β1 étant supérieur à l'angle β2. Le troisième tronçon 43" fait un angle égal à 0° avec la direction D perpendiculaire à la face de contact au point d'intersection de l'incision avec ladite face dans le plan de coupe considéré.

Pour éviter des problèmes éventuels en fond d'incision, il est réalisé à l'extrémité du troisième tronçon une partie élargie 44".

Dans le cas des deux incisions montrées sur la figure 3, les traces 45' et 45" desdites incisions sur la face de contact de la nervure présentent une géométrie curviligne, l'angle que font les tangentes à ces traces avec une direction transversale au point d'intersection avec l'arête de la nervure étant différent de 0°.

De préférence, la longueur moyenne L de la trace de chaque incision 4', 4" sur la surface de roulement 30' est au moins égale à 10% de et au plus égale à 35% de la demi largeur B' de la nervure de manière à obtenir une amélioration significative en usure irrégulière affectant les bords des nervures sans pour autant pénaliser l'usure moyenne régulière.

Bien entendu chaque incision montrée et décrite dans les différents exemples peut être employée seule ou en combinaison sur un côté ou sur les deux côtés d'une nervure.

Avantageusement, les variations d'inclinaison d'une même incision dans plusieurs plans de coupe perpendiculaires à l'axe de rotation sont différentes d'un plan de coupe à un autre.

L'invention n'est pas limitée aux seuls exemples décrits et diverses modifications peuvent y être apportées par la personne du métier sans sortir de son cadre.

## Revendications

1. Bande de roulement (1) pour pneumatique destiné à l'équipement d'un essieu avant d'un véhicule poids lourd, ce pneumatique présentant un sens de roulage préférentiel et comportant une armature de carcasse radiale surmontée d'une armature de sommet, cette bande comprenant des rainures (2) d'orientation générale circonférentielle de profondeur H délimitant des nervures (30, 31, 32, 33, 35), chaque nervure de largeur B ayant une face de contact destinée à être en contact avec la chaussée et deux faces latérales coupant la face de contact en formant deux arêtes, au moins une des nervures étant munie près de chacune de ses arêtes d'une pluralité d'incisions de largeur inférieure à 1.5 mm et de profondeur E au moins égale à 40% de la profondeur H des rainures, ces incisions débouchant sur la face de contact sont sensiblement parallèles entre elles et présentent, vue en coupe dans un plan perpendiculaire à l'axe de rotation, une inclinaison moyenne α non nulle par rapport à la direction perpendiculaire à la surface de roulement (S) de la bande à l'état neuf de sorte que la force résultante exercée en roulage dans la zone de contact avec la chaussée par ladite chaussée sur la bande tende à redresser les incisions vers une inclinaison moyenne nulle par rapport à cette perpendiculaire, chaque incision d'une même nervure, vue dans un plan de coupe perpendiculaire à l'axe de rotation du pneumatique, présente, avec une perpendiculaire à la face de contact de ladite nervure au point d'intersection de ladite incision avec ladite face, une inclinaison variable dans l'épaisseur de la bande, chaque incision étant inclinée par rapport à ladite perpendiculaire, en son point d'intersection avec la surface de roulement à l'état neuf, d'un angle β1, l'angle β1 étant supérieur à l'angle α, et d'un angle β2 au point de l'incision le plus à l'intérieur de la bande, l'angle β2 étant inférieur à l'angle α le point de ladite incision le plus à l'intérieur dans la bande étant situé, par rapport à ladite perpendiculaire, de manière à être en avant du point de l'incision situé sur la face de contact de la nervure, cette bande étant **caractérisée en ce que** la longueur moyenne (L) de chaque incision d'inclinaison variable formée dans une nervure est au moins égale à 10% et au plus égale à 35% de la largeur B de ladite nervure.

2. Bande de roulement (1) selon la revendication 1 **caractérisée en ce que** chaque incision formée sur une nervure débouche sur une face latérale de cette nervure.

3. Bande de roulement (1) selon la revendication 1 ou la revendication 2 **caractérisée en ce que** l'inclinaison moyenne est au moins égale à 5° et au plus égale à 15°.

4. Bande de roulement (1) selon l'une des revendications 1 à 3 **caractérisée en ce que** l'angle β1 est au moins égal à 5° et au plus égal à 15°.

5. Bande de roulement (1) selon l'une quelconque des revendications 1 à 4 **caractérisée en ce que**, vue en coupe et au point le plus à l'intérieur de la bande de roulement des incisions (41, 42, 43), l'angle β2 est voisin de ou égal à 0°, c'est-à-dire au plus égal à 5°.

6. Bande de roulement (1) selon l'une des revendications 1 à 5 **caractérisée en ce que**, sur chaque nervure pourvue d'incisions à inclinaison variable dans l'épaisseur, lesdites incisions (41, 42, 43) sont régulièrement réparties dans la direction circonférentielle avec un pas p au moins égal à 4 mm et au plus égal à 10 mm.

7. Bande de roulement (1) selon l'une des revendications 1 à 6 **caractérisée en ce que** chaque incision d'inclinaison variable dans l'épaisseur présente à partir de la surface de roulement à l'état neuf une zone d'inclinaison au moins égale à 10°, sur au maximum un tiers de la profondeur de l'incision.

8. Bande de roulement (1) selon l'une des revendications 1 à 7 **caractérisée en ce que** la trace sur la face de contact des incisions d'inclinaison variable dans l'épaisseur présente une inclinaison d'angle γ mesuré par rapport à la direction transversale qui varie en partant du point d'intersection avec l'arête jusqu'au point transversalement le plus à l'intérieur.

## Claims

1. Tread (1) for a tyre intended for fitting on the front axle of a heavy vehicle, the said tyre having a preferred rolling direction and comprising a radial carcass reinforcement covered by a crown reinforcement, the said tread having grooves (2) of substantially circumferential orientation and of depth H that delimit ribs (30, 31, 32, 33, 35), each rib of width B having a contact surface intended to be in contact with the road and two side faces that intersect the contact surface to form two edges, at least one of the ribs being provided close to each of its edges with a plurality of incisions whose width is smaller than 1.5 mm and whose depth E is at least equal to 40% of the depth H of the grooves, the said incisions opening onto the contact surface, being essentially parallel to one another and, when viewed in cross-section in a plane perpendicular to the rotation axis, having a mean inclination α different from zero relative to the direction perpendicular to the rolling surface (S) of the tread when new, such that the resultant force exerted during rolling in the zone of contact with the road by the said road on the tread tends to straighten the incisions towards zero mean inclination relative to the said perpendicular, such that when viewed in a section plane perpendicular to the rotation axis of the tyre, each incision in a given rib, relative to a perpendicular to the contact surface of the said rib at the point where the said incision intersects the said surface, has an inclination which varies within the thickness of the tread, and each incision is inclined relative to the said perpendicular, at its point of intersection with the rolling surface when new, at an angle β1, the angle β1 being larger than the angle α, and at an angle β2 at the point of the incision furthest inside the tread, the angle β2 being smaller than the angle α, the point of the said incision furthest inside the tread being located, relative to the said perpendicular, such that it is ahead of the point of the incision located on the contact surface of the rib, the said tread being **characterised in that** the mean length (L) of each incision with variable inclination formed in a rib is equal to at least 10% and at most 35% of the width (B) of the said rib.

2. Tread (1) according to Claim 1,
**characterised in that**
each incision formed in a rib opens onto a side face of the said rib.

3. Tread (1) according to Claims 1 or 2,
**characterised in that**
the mean inclination is at least equal to 5° and at most equal to 15°.

4. Tread (1) according to any of Claims 1 to 3,
**characterised in that**
the angle β is at least equal to 5° and at most equal to 15°.

5. Tread (1) according to any of Claims 1 to 4,
**characterised in that**
when viewed in cross-section and at the point of the incisions (41, 42, 43) furthest inside the tread, the angle β2 is close or equal to 0°, that is to say, at most equal to 5°.

6. Tread (1) according to any of Claims 1 to 5,
**characterised in that**
on each rib provided with incisions whose inclination varies with depth, the said incisions (41, 42, 43) are distributed regularly in the circumferential direction spaced at an interval p equal to at least 4 mm and at most 10 mm.

7. Tread (1) according to any of Claims 1 to 6,
**characterised in that**
each incision whose inclination varies with its depth has, starting from the rolling surface when new, a zone whose inclination is at least equal to 10°, which extends over at most one-third of the depth of the incision.

8. Tread (1) according to any of Claims 1 to 7,
**characterised in that**
the trace on the contact surface of the incisions whose inclination varies with depth, has an inclination of angle γ measured relative to the transverse direction, which varies between the point of intersection with the edge and the transversely innermost point.

## Patentansprüche

1. Laufstreifen (1) für einen Luftreifen, der dazu vorgesehen ist, eine Vorderachse eines Schwerlastfahrzeugs auszustatten, wobei dieser Luftreifen eine bevorzugte Laufrichtung aufweist und eine radiale Karkassenbewehrung besitzt, über der sich eine Scheitelbewehrung befindet, wobei der Laufstreifen Rillen (2) von allgemein umlaufender Orientierung mit einer Tiefe H besitzt, die Rippen (30, 31, 32, 33, 35) begrenzen, wobei jede Rippe der Breite B eine Kontaktfläche aufweist, die mit der Fahrbahn in Kontakt kommen soll, und zwei Seitenflächen besitzt, die die Kontaktfläche unter Bildung von zwei Kanten schneiden, wobei mindestens eine Rippe in der Nähe ihrer Kanten mit einer Vielzahl von Feineinschnitten mit einer Breite unter 1,5 mm und einer Tiefe E von mindestens 40 % der Tiefe H der Rippen versehen ist, wobei die Feineinschnitte, die an der Kontaktfläche münden, in etwa parallel zueinander verlaufen und in der Schnittansicht in einer Ebene senkrecht zur Drehachse eine in Bezug auf die Richtung senkrecht zur Lauffläche (S) des Laufstreifens im Neuzustand von Null verschiedene mittlere Neigung α aufweisen, so dass die bei der Fahrt in der Kontaktzone mit der Fahrbahn durch die Fahrbahn auf den Laufstreifen ausgeübte resultierende Kraft die Einschnitte in Bezug auf diese Senkrechte in Richtung einer mittleren Neigung Null aufrichtet, wobei jeder Feineinschnitt einer Rippe in einer Schnittebene senkrecht zur Drehachse des Luftreifens mit einer Senkrechten zur Kontaktfläche der Rippe am Schnittpunkt des Feineinschnitts mit dieser Fläche eine in der Dicke des Laufstreifens variable Neigung besitzt, wobei jeder Feineinschnitt in Bezug auf diese Senkrechte am Schnittpunkt mit der Lauffläche im Neuzustand in einem Winkel β 1 geneigt ist, wobei der Winkel β 1 größer als der Winkel α ist, und an dem Punkt des Einschnitts, der an dem Laufstreifen am weitesten innen liegt, in einem Winkel β2 geneigt ist, wobei der Winkel β2 kleiner ist als der Winkel α, wobei der Punkt des Einschnittes, der an dem Laufstreifen am weitesten innen liegt, bezogen auf die Senkrechte so angeordnet ist, dass er vor dem Punkt des Einschnitts liegt, der sich an der Kontaktfläche der Rippe befindet, wobei der Laufstreifen **dadurch gekennzeichnet ist, dass** die mittlere Länge (L) jedes neigungsvariablen Einschnitts, der in einer Rippe gebildet ist, mindestens 10 % und höchstens 35 % der Breite B der Rippe ausmacht.

2. Laufstreifen (1) nach Anspruch 1, **dadurch gekennzeichnet, dass** jeder an einer Rippe gebildete Feineinschnitt an einer Seitenfläche der Rippe mündet.

3. Laufstreifen (1) nach Anspruch 1 oder nach Anspruch 2, **dadurch gekennzeichnet, dass** die mittlere Neigung mindestens 5° und höchstens 15° beträgt.

4. Laufstreifen (1) nach einem der Ansprüche 1 bis 3, **dadurch gekennzeichnet, dass** der Winkel β1 mindestens 5° und höchstens 15° beträgt.

5. Laufstreifen (1) nach einem der Ansprüche 1 bis 4, **dadurch gekennzeichnet, dass** in der Schnittansicht der Feineinschnitte (41, 42, 43) an dem am weitesten innen gelegenen Punkt des Laufstreifens der Winkel β2 0° oder etwa 0°, d. h. höchstens 5° beträgt.

6. Laufstreifen (1) nach einem der Ansprüche 1 bis 5, **dadurch gekennzeichnet, dass** an jeder Rippe, die mit in der Dicke neigungsvariablen Feineinschnitten versehen ist, die Feineinschnitte (41, 42, 43) in Umfangsrichtung mit einem Abstand p von mindestens 4 mm und höchstens 10 mm regelmäßig verteilt sind.

7. Laufstreifen (1) nach einem der Ansprüche 1 bis 6, **dadurch gekennzeichnet, dass** jeder in der Dicke neigungsvariable Feineinschnitt ausgehend von der Lauffläche im Neuzustand einen Neigungsbereich von mindestens 10° an maximal einem Drittel der Tiefe des Feineinschnitts aufweist.

8. Laufstreifen (1) nach einem der Ansprüche 1 bis 7, **dadurch gekennzeichnet, dass** der Verlauf der in der Dicke neigungsvariablen Feineinschnitte an der Kontaktfläche einen Neigungswinkel γ aufweist, der in Bezug auf die Querrichtung gemessen wird, der sich von dem Schnittpunkt mit der Kante bis zu dem in Querrichtung am weitesten innen gelegenen Punkt verändert.
